# FASCICULE DE BREVET EUROPEEN

(11) **EP 3 274 998 B1**
(45) Date de publication et mention de la délivrance du brevet: **20.02.2019**
(21) Numéro de dépôt: 16713827.0
(22) Date de dépôt: 24.03.2016
(51) Int. Cl.: G21F 5/10, G21F 5/14, G21F 5/005

(54) **DISPOSITIF DE SUPPORT D'UN EMBALLAGE DE TRANSPORT / ENTREPOSAGE DE MATIERES RADIOACTIVES, COMPRENANT UN CARENAGE DE GUIDAGE D'AIR DE REFROIDISSEMENT DE L'EMBALLAGE PAR CONVECTION NATURELLE**
VORRICHTUNG ZUR STÜTZUNG EINER VERPACKUNG ZUM TRANSPORTIEREN/LAGERN VON RADIOAKTIVEN MATERIALIEN MIT EINER UMMANTELUNG ZUR FÜHRUNG VON LUFT ZUR KÜHLUNG DER VERPACKUNG DURCH NATÜRLICHE KONVEKTION
DEVICE FOR SUPPORTING PACKAGING FOR TRANSPORTING/STORING RADIOACTIVE MATERIALS, INCLUDING A SHROUD FOR GUIDING AIR FOR COOLING THE PACKAGING BY NATURAL CONVECTION

(30) Priorité: 25.03.2015 FR 1552512
(43) Date de publication de la demande: 31.01.2018
(73) Titulaire: TN International, 78180 Montigny Le Bretonneux (FR)
(72) Inventeur: BARDON, Olivier, 92370 Chaville (FR); POQUE, Laurent, 78180 Montigny le Bretonneux (FR); GARNIER, Ludovic, 50600 Virey (FR)
(74) Mandataire: Brevalex
(86) Numéro de dépôt international: PCT/EP2016/056593
(87) Numéro de publication internationale: WO 2016/151094

(56) Documents cités:
- WO-A1-2014/167026
- FR-A1- 2 467 468
- FR-A1- 2 973 925
- JP-A- 2001 235 582
- JP-A- 2009 244 045

## Description

### DOMAINE TECHNIQUE

La présente invention se rapporte au domaine du transport et de l'entreposage de matières radioactives. Elle concerne plus particulièrement le transport / entreposage en position horizontale d'un emballage destiné à contenir des matières radioactives.

### ÉTAT DE LA TECHNIQUE ANTÉRIEURE

Un emballage de transport / entreposage de matières radioactives présente habituellement un corps latéral, un fond et un couvercle. Ces parties de l'emballage définissent une cavité de logement des matières radioactives, par exemple des assemblages de combustible nucléaire frais ou irradiés, ou des étuis de déchets. De plus, un panier peut être agencé au sein de la cavité de logement pour définir des compartiments dans lesquels sont placés les différents étuis/assemblages.

Pour l'entreposage de l'emballage sur différents sites et/ou son transport entre ces sites, l'emballage est placé sur un dispositif de support, sur lequel il repose en position horizontale. Le dispositif de support forme une entité à part entière, ou bien est intégré à un système de transport, routier ou ferroviaire. Dans tous les cas, ce dispositif de support est conçu pour remplir la fonction de support mécanique de l'emballage en position horizontale, tandis que la fonction de refroidissement est assurée par la surface externe de l'emballage formant surface d'échange. Dans le cas d'une forte puissance, cette surface d'échange peut d'ailleurs être augmentée à l'aide d'ailettes agencées en périphérie du corps latéral de cet emballage. Avec ou sans ailettes, il peut être rencontré une forte hétérogénéité spatiale des températures, due à la fois à une accentuation de la charge thermique vers le bas à cause du contact du panier sur la surface interne de la cavité, mais aussi à une efficacité moindre de la convection naturelle en partie basse de l'emballage, où l'air est encore insuffisamment accéléré.

Ainsi, même en présence des ailettes de refroidissement, la partie basse de l'emballage constitue une zone particulièrement chaude lorsque celui-ci repose horizontalement sur le dispositif de support, la répartition des températures n'étant pas homogène tout autour du corps latéral de l'emballage. La dissipation thermique peut ne pas s'avérer suffisamment performante dans cette zone chaude, car l'air ambiant rencontre des difficultés à venir au plus près de cette zone. Cette problématique est également rencontrée lorsque le corps latéral n'est pas recouvert d'ailettes de refroidissement.

Pour limiter l'étendue de cette zone chaude de l'emballage ainsi que sa température, il peut être envisagé d'ajouter des ailettes de refroidissement ou d'en d'améliorer leur efficacité. Néanmoins, cela requiert des coûts de développement et de mise au point élevés. Une autre solution consiste à abaisser la puissance thermique autorisée au sein de l'emballage, de manière à ce que la zone chaude engendrée respecte les critères de qualification des matériaux sensibles constitutifs de l'emballage, comme la résine neutrophage. Néanmoins, la diminution de la puissance thermique autorisée conduit obligatoirement à baisser la quantité de matières radioactives transportable par l'emballage, ce qui impacte de façon négative les contraintes d'exploitation.

Le document WO 2014/167026 A1 est un exemple d'art antérieur pertinent qui divulgue un dispositif de support d'un emballage de transport / entreposage de matières radioactives en position horizontale, le dispositif de support comprenant une base structurale ainsi que des moyens de support de l'emballage portés par ladite base structurale à partir de laquelle ils font saillie vers le haut.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un dispositif de support d'un emballage de transport / entreposage de matières radioactives en position horizontale, le dispositif de support comprenant une base structurale ainsi que des moyens de support de l'emballage portés par ladite base structurale à partir de laquelle ils font saillie vers le haut. Selon l'invention, le dispositif de support comprend de plus, situé au moins en partie au-dessus de la base structurale, un carénage de guidage d'air de refroidissement de l'emballage par convection naturelle, ledit carénage définissant une cavité ouverte vers le haut et dans laquelle une partie de l'emballage est destinée à être logée lorsque cet emballage est supporté en position horizontale sur le dispositif, ledit carénage comprenant, en partie basse de celui-ci, au moins une ouverture d'admission d'air de refroidissement dans ladite cavité.

Avantageusement, le carénage spécifique à l'invention permet l'amélioration du refroidissement de l'emballage en position horizontale, au niveau de sa partie basse, grâce à un effet de convection naturelle. L'invention constitue donc une solution permettant de réduire, voire de supprimer la zone chaude en partie basse de l'emballage, et ce à moindre coût et sans abaisser la puissance thermique autorisée.

De plus, le fait que le carénage soit intégré au dispositif de support de l'emballage de transport / entreposage, et non à l'emballage lui-même, permet de bénéficier des avantages suivants :
- s'affranchir des problèmes d'exploitation, notamment lorsque l'emballage est immergé en piscine pour le chargement d'assemblages de combustible irradié. En effet, si l'emballage devait être pourvu d'une telle enveloppe comme cela est par exemple proposé dans le document FR 2 467 468, l'eau contaminée de la piscine pourrait alors pénétrer dans l'enveloppe par l'ouverture d'admission d'air, rendant ainsi particulièrement complexe la décontamination de l'emballage avant transport ;
- le carénage selon l'invention, qui forme une sorte d'enveloppe autour de la surface extérieure de l'emballage, est destiné à améliorer le refroidissement de l'emballage en configuration horizontale. Dans la solution du document FR 2 467 468, le fait de prévoir une telle enveloppe sur l'emballage ainsi que des éléments structurels pour fixer l'enveloppe à l'emballage, peut fortement compromettre l'efficacité du refroidissement de ce dernier lorsqu'il est position verticale, telle qu'adoptée notamment en configuration d'entreposage. Cet inconvénient ne se produit dans l'invention, puisque le carénage est intégré au support ;
- de façon générale, le fait de reporter la fonction « refroidissement de la partie basse de l'emballage » sur le support permet de la dé-corréler des autres fonctions classiques de sûreté de l'emballage. Il n'est donc pas nécessaire de justifier l'impact de l'enveloppe, caractéristique structurelle supplémentaire, vis-à-vis des exigences réglementaires. ;

- toujours dans le cas où l'emballage est équipé d'une telle enveloppe, son encombrement hors tout peut alors devenir incompatible avec les installations. Inversement, si l'on souhaite conserver un même diamètre hors tout, cela conduit à une réduction des capacités de l'emballage.

L'intégration du carénage au sein du dispositif de support permet également :
- de réduire le nombre d'enveloppes/carénages à réaliser, et donc de diminuer les coûts puisqu'un même dispositif de support est destiné à une flotte de plusieurs emballages ;
- de résoudre le problème technique lié aux aspects thermiques, sans modifier les emballages existants : il suffit de les placer sur le support conforme à la présente invention ;
- une optimisation du carénage pour réduire la zone chaude en partie basse de l'emballage. En effet, avec l'invention proposée, il n'est pas nécessaire d'envelopper entièrement l'emballage. En particulier, il n'est pas requis de carénage en partie haute lorsque l'emballage est considéré en position horizontale, alors que l'art antérieur suggère un carénage enveloppant totalement l'emballage. Au contraire, l'invention constitue une solution plus simple et moins encombrante qui permet de répondre de manière satisfaisante/optimisée au problème technique de refroidissement d'une zone localisée (point bas de l'emballage).

L'invention présente de préférence au moins l'une quelconque des caractéristiques optionnelles suivantes, prises isolément ou en combinaison.

Lesdits moyens de support comprennent des premiers moyens de support destinés à recevoir une partie de tête de l'emballage, ainsi que des seconds moyens de support destinés à recevoir une partie de fond de l'emballage, lesdits premiers et second moyens de support étant écartés axialement d'une distance d'écartement axial (Dea), et le carénage de guidage d'air présente de préférence une longueur axiale (La) sensiblement identique à la distance d'écartement axial (Dea).

Ledit carénage comporte une première extrémité axiale fixée sur lesdits premiers moyens de support, ainsi qu'une seconde extrémité axiale fixée sur lesdits seconds moyens de support.

Alternativement, ou simultanément avec la solution de fixation sur les moyens de support qui vient d'être mentionnée, ledit carénage est fixé à ladite base structurale du dispositif de support.

La distance d'écartement axial (Dea) est comprise entre 1,5 et 4 m.

Ledit carénage présente une forme générale semi-cylindrique, percée de ladite au moins une ouverture d'admission d'air de refroidissement.

Par exemple, ne faisant pas partie de l'invention comme revendiqué, la section transversale dudit carénage présente une forme générale semi-circulaire.

Selon un autre exemple, ne faisant pas partie de l'invention comme revendiqué, la section transversale dudit carénage présente une forme générale semi-octogonale, dont le côté le plus proche de la base structurale est agencé parallèlement à la direction horizontale. De préférence, le plan axial et vertical médian du dispositif de support, orthogonal au plan de section transversale du carénage, constitue un plan de symétrie pour le carénage. Avantageusement, grâce au côté incliné de la section semi-octogonale, le carénage peut aspirer une plus grande quantité d'air et faciliter la descente progressive de l'air froid vers le bas. De plus, la structure de forme semi-octogonale présente l'avantage de se rapprocher d'une forme cylindrique et donc permet l'obtention d'un canal d'air de refroidissement d'épaisseur à peu près constante, tout en étant à moindre à coût.

Dans le cas de la section semi-octogonale, ledit côté le plus proche de la base structurale est percé de ladite au moins une ouverture d'admission d'air de refroidissement.

A cet égard, il est de préférence fait en sorte que ladite au moins une ouverture d'admission d'air de refroidissement soit agencée au niveau d'un point bas du carénage. Cela contribue avantageusement à l'amélioration du refroidissement, car le flux d'air peut circuler sur ou à forte proximité du point bas chaud de l'emballage. Alternativement, l'ouverture d'admission d'air de refroidissement peut être agencée à proximité d'un point bas du carénage, et non pas précisément sur ce même point bas.

Ladite au moins une ouverture d'admission d'air de refroidissement s'étend sur toute la longueur axiale (La) du carénage, et, plus généralement, de préférence sur au moins 90% de cette longueur axiale du carénage.

Ladite au moins une ouverture d'admission d'air de refroidissement présente une largeur transversale comprise entre 100 et 500 mm, et est préférentiellement de l'ordre de 300 mm.

Il est prévu un espace libre sous ledit carénage, ledit espace libre présentant, au niveau d'un point bas du carénage, une hauteur sous carénage comprise entre 50 et 400 mm, et préférentiellement de l'ordre de 200 mm.

A cet égard, il est noté que dans certains cas, la base structurale comporte des longerons reliant les moyens de support, comme dans le cas d'un châssis conventionnel. Dans ce cas de figure, le point bas du carénage peut se trouver en dessous d'un point haut des longerons, c'est-à-dire que le carénage est en partie agencé dans l'espace défini entre les longerons, mais toujours avec une hauteur minimale sous carénage telle que définie ci-dessus.

De préférence, ladite hauteur sous carénage est supérieure ou égale à la moitié de la largeur transversale de l'ouverture d'admission d'air de refroidissement.

A titre indicatif, ledit carénage présente une épaisseur comprise entre 1 et 5 mm, de préférence réalisée à l'aide d'une tôle pliée, notamment dans le cas de la section de forme générale semi-octogonale.

Selon une première application, le dispositif de support forme un châssis de transport / entreposage de l'emballage, éventuellement destiné à être manutentionné avec l'emballage lorsque ce dernier se trouve supporté par le dispositif. Dans ce cas, le châssis peut par exemple être placé sur la plateforme d'un système de transport de matières radioactives, par exemple la plateforme d'un wagon appartenant à un système de transport ferroviaire, ou encore la plateforme d'une remorque appartenant à un système de transport routier.

Selon une seconde application, la base structurale forme tout ou partie d'une plateforme d'un wagon appartenant à un système de transport ferroviaire, ou forme tout ou partie d'une plateforme d'une remorque appartenant à un système de transport routier. Dans cette application, le dispositif de support selon l'invention est directement intégré à la structure du système de transport, de sorte qu'il n'est pas conçu pour être manutentionné, mais destiné à rester à demeure sur le véhicule dont il fait partie intégrante.

L'invention a également pour objet un ensemble comprenant un emballage de transport / entreposage de matières radioactives, ainsi qu'un dispositif de support tel que décrit ci-dessus, ledit emballage étant supporté en position horizontale sur ledit dispositif, avec une partie d'un corps latéral de l'emballage logée dans ladite cavité définie par le carénage de guidage d'air de refroidissement.

De préférence, ledit emballage comporte des tourillons de manutention, et lesdits moyens de support du dispositif comportent des logements recevant chacun l'un desdits tourillons.

Selon une autre possibilité, lesdits moyens de support du dispositif comportent au moins deux berceaux sur lesquels repose le corps latéral de l'emballage.

Quelle que soit la conception retenue, le corps latéral de l'emballage comporte de préférence un diamètre extérieur compris entre 1 et 2,5 m.

Pour améliorer le tirage, le carénage de guidage d'air de refroidissement présente de préférence deux extrémités transversales opposées, se situant chacune sur ou à proximité d'un plan axial et horizontal médian de l'emballage.

Préférentiellement, la surface intérieure du carénage et la surface extérieure du corps latéral de l'emballage définissent entre eux un canal de circulation d'air de refroidissement, d'épaisseur moyenne comprise entre 50 et 200 mm.

A cet égard, il est noté que le carénage remplit deux fonctions. La première fonction, qui est essentielle, consiste à faire entrer l'air frais au bas de l'emballage. La seconde fonction consiste à faire circuler au mieux l'air autour de l'emballage, une fois celui-ci entré dans le carénage. Par nature de la convection naturelle, l'air qui circule est collé à la paroi latérale de l'emballage. Toutefois, le tirage est effectivement plus efficace avec un carénage sensiblement parallèle à la surface latérale du corps latéral de l'emballage.

Aussi, de manière préférentielle, il est prévu que la surface intérieure du carénage et la surface extérieure du corps latéral de l'emballage définissent entre eux un canal de circulation d'air de refroidissement d'épaisseur sensiblement constante. En d'autres termes, ces deux surfaces sont sensiblement parallèles, de manière maximiser le débit d'aspiration, et améliorer de ce fait le tirage.

Enfin, l'invention a pour objet un système de transport de matières radioactives, routier ou ferroviaire, comprenant un dispositif de support tel que décrit ci-dessus, ladite base structurale du dispositif de support étant rapportée sur une plateforme du système de transport, ou formant tout ou partie de cette plateforme.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un ensemble selon un premier mode de réalisation préféré de l'invention, intégrant un emballage de transport / entreposage de matières radioactives ainsi que son dispositif de support ;
- la figure 2 est une vue de côté de l'ensemble montré sur la figure précédente ;
- la figure 3 est vue en coupe transversale prise le long de ligne III-III de la figure 2 ;
- la figure 3a est une vue similaire à celle de la figure précédente, avec le carénage du dispositif de support se présentant sous une autre forme de réalisation ;
- la figure 3b est une vue similaire à celle de la figure 3, avec le carénage du dispositif de support se présentant encore sous une autre forme de réalisation ;
- la figure 4 représente une vue en perspective d'un ensemble selon un second mode de réalisation préféré de l'invention, intégrant un emballage de transport / entreposage de matières radioactives ainsi que son dispositif de support ;
- la figure 5 est une vue de côté d'un système routier de transport de matières radioactives, intégrant un ensemble selon l'invention ; et
- la figure 6 est une vue en perspective d'un système ferroviaire de transport de matières radioactives, intégrant un ensemble selon l'invention.

### EXPOSÉ DÉTAILLÉ DE MODES DE RÉALISATION PARTICULIERS

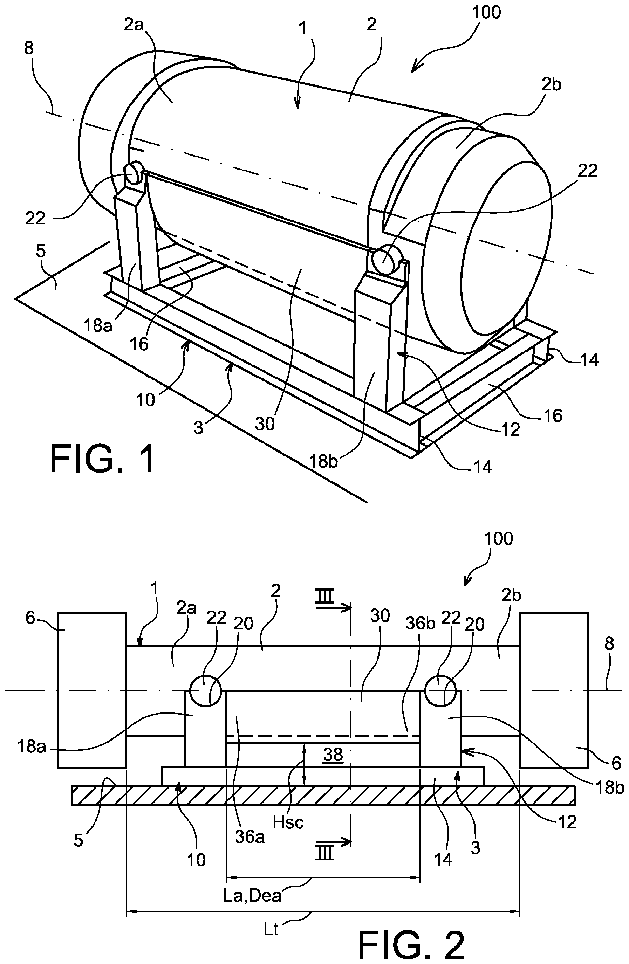

En référence tout d'abord aux figures 1 à 3, il est représenté un ensemble 100 selon un premier mode de réalisation préféré de l'invention, cet ensemble 100 comprenant un emballage 1 pour le transport / entreposage de matières radioactives, ainsi qu'un dispositif de support 3 supportant l'emballage. Dans ce mode de réalisation, le dispositif 3 prend la forme d'un châssis de transport / entreposage reposant par exemple à la surface du sol 5. L'emballage 1 est indépendant du dispositif de support 3, sur lequel il peut être temporairement fixé,= de manière amovible, par exemple à l'aide de sangles, armatures, tourillons, etc.

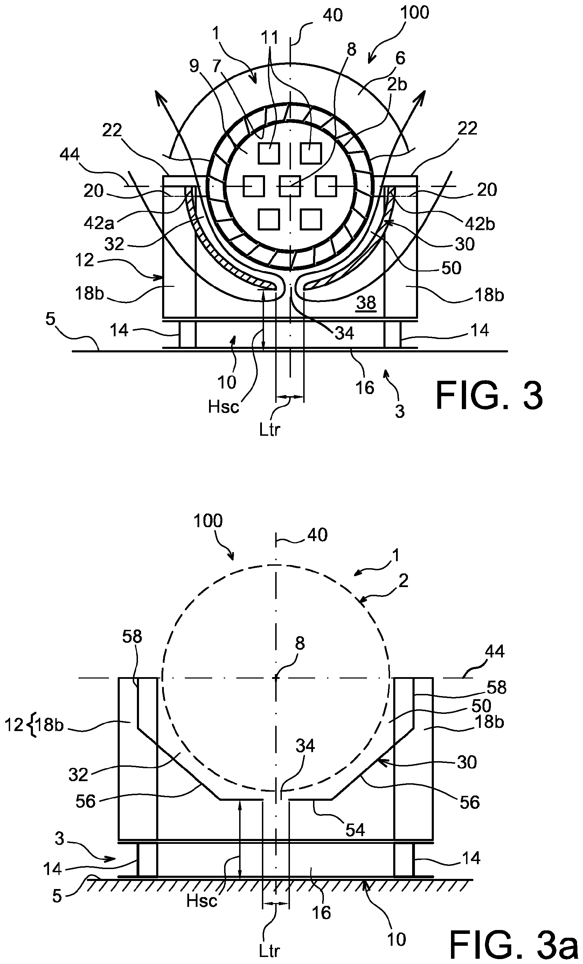

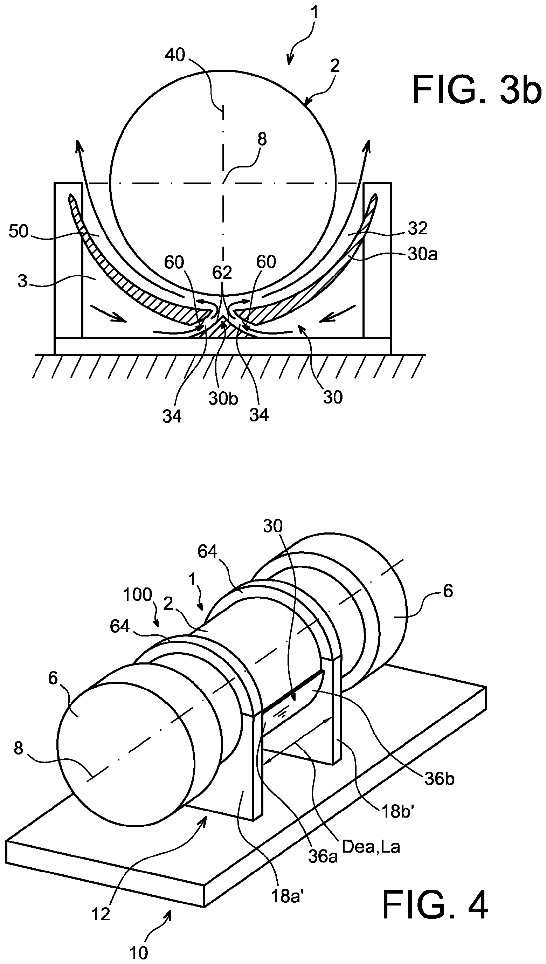

De manière conventionnelle, l'emballage 1 est pourvu d'un corps latéral 2, d'un fond et d'un couvercle obturant une ouverture de l'emballage opposée au fond. Le fond et le couvercle peuvent être recouverts respectivement par deux capots amortisseurs de chocs 6 montés aux extrémités du corps d'emballage, comme cela est visible sur les figures 2 et 3.

L'emballage 1 présente un axe longitudinal 8 centré par rapport au corps latéral 2, et traversant le couvercle ainsi que le fond de ce même emballage. L'axe 8 est agencé sensiblement parallèlement au châssis 3. Ainsi, lorsque l'emballage 1 repose en position horizontale sur le châssis 3, son axe longitudinal 8 est également orienté horizontalement.

Egalement de manière conventionnelle, l'emballage forme une enveloppe extérieure d'un colis et définit une cavité 7 servant au logement des matières radioactives, et éventuellement d'un panier de rangement 9. Les matières radioactives peuvent par exemple être des étuis de déchets, ou encore des assemblages de combustible nucléaire 11.

La particularité de l'invention réside dans la conception du châssis de transport / entreposage 3, qui va à présent être détaillée toujours en référence aux figures 1 à 3.

Globalement, le châssis 3 comporte une base structurale 10, ainsi que des moyens de support 12 de l'emballage portés par la base 10.

Dans ce premier mode de réalisation préféré, la base structurale est réalisée à partir de longerons principaux 14 s'étendant horizontalement selon la direction longitudinale de l'ensemble, ainsi qu'à partir de longerons de raccord 16 reliant les longerons principaux 14 et s'étendant horizontalement selon la direction transversale de l'ensemble 100. Tous les longerons 14, 16 s'inscrivent de préférence dans un même plan, correspondant au plan de la base structurale 10.

Les moyens de support 12 sont quant à eux répartis en premiers moyens de support associés à une partie tête 2a de l'emballage, et seconds moyens de support associés à une partie fond 2b de l'emballage. Plus précisément, les premiers moyens de support comprennent deux montants 18a faisant saillie verticalement vers le haut à partir de la base structurale, tandis que les seconds moyens de support comprennent deux montants 18b agencés en saillie de manière analogue.

Les premiers et seconds montants 18a, 18b comportent chacun, en extrémité supérieure, un logement 20 recevant un tourillon de manutention 22 équipant le corps latéral 2 de l'emballage. Chaque tourillon 22 est agencé conventionnellement en saillie transversalement à partir de ce corps latéral 2, dont le diamètre extérieur est compris entre 1 et 2,5 m. Lorsque ce corps latéral est équipé d'ailettes de refroidissement à sa périphérie, cette valeur de diamètre intègre la présence de ces ailettes.

La distance d'écartement axial Dea entre les premiers et seconds montants 18a, 18b est comprise entre 1,5 et 4 m, tandis que la longueur totale Lt du corps latéral 2 est comprise entre 2 et 6 m, ces valeurs étant considérées selon la direction de l'axe 8, correspondant à la direction axiale / longitudinale de l'ensemble 100.

Dans ce mode de réalisation, l'espace entre les premiers et seconds montants 18a, 18b est fonctionnalisé, puisqu'il intègre un carénage 30 de guidage d'air de refroidissement de l'emballage par convection naturelle.

Ce carénage 30 est situé au moins en partie au-dessus de la base structurale 10, et définit une cavité 32 ouverte vers le haut et dans laquelle une partie de l'emballage est destinée à être logée lorsque ce dernier est supporté en position horizontale sur les premiers et seconds montants 18a, 18b. Pour permettre le tirage, le carénage 30 comprend, en partie basse de celui-ci, au moins une ouverture 34 d'admission d'air de refroidissement dans la cavité 32. Cette ouverture 34 est agencée au niveau d'un point bas du carénage, et s'étend de préférence sur une longueur axiale identique à la longueur axiale La du carénage, sensiblement identique à la distance d'écartement axial Dea entre les premiers et seconds montants 18a, 18b. En effet, une première extrémité axiale 36a du carénage est fixée sur les premiers montants 18a, tandis qu'une seconde extrémité axiale 36b opposée à la première est fixée sur les seconds montants 18b.

Dans ce mode de réalisation préféré, le carénage 30 est de forme générale semi-cylindrique, avec une section transversale de forme générale semi-circulaire, dont le centre se trouve sur ou à forte proximité de l'axe 8. Dans le cas préféré où l'ouverture 34 s'étend sur toute la longueur axiale La du carénage 30, ce dernier prend alors la forme de deux quarts de cylindre séparés par l'ouverture 34, dont la largeur transversale Ltr est comprise entre 100 et 500 mm, et de préférence d'environ 300 mm.

En outre, il est prévu un espace libre 38 sous le carénage, la limite basse de cet espace libre étant constituée par la surface du sol 5 entre les longerons principaux 14. Au niveau du point bas du carénage 30, la hauteur sous carénage Hsc de cet espace libre 38 est comprise entre 50 et 400 mm, et préférentiellement de l'ordre de 200 mm. Plus généralement, pour une efficacité accrue, il est fait en sorte que la hauteur sous carénage Hsc soit supérieure ou égale à la moitié de la largeur transversale Ltr de l'ouverture 34 d'admission d'air de refroidissement.

Le plan axial et vertical médian 40 de l'ensemble 100 traverse l'ouverture 34 longitudinalement et symétriquement. De part et d'autre de ce plan 40, le carénage 30 présente deux extrémités transversales opposées 42a, 42b, se situant chacune sur ou à proximité d'un plan horizontal et axial médian 44 de l'emballage 1. Les tourillons 22 équipant le corps latéral 2 sont également traversés symétriquement par ce plan médian 44.

En référence plus spécifiquement à la figure 3, il est noté que la surface intérieure du carénage et la surface extérieure du corps latéral de l'emballage définissent entre eux un canal de circulation d'air de refroidissement 50, d'épaisseur moyenne comprise entre 50 et 200 mm. En prévoyant cette épaisseur sensiblement constante et relativement faible, c'est-à-dire en appliquant un parallélisme entre les deux surfaces précitées définissant le canal 50, l'air de refroidissement peut en effet circuler au mieux autour de l'emballage, par convection naturelle. Plus précisément, le carénage 30 spécifique à l'invention permet l'amélioration du refroidissement de l'emballage en position horizontale, au niveau de sa partie basse, grâce à un effet de convection naturelle de l'air qui pénètre d'abord par l'ouverture 34, avant de circuler dans le canal 50, puis de s'échapper vers le haut au niveau des extrémités transversales 42a, 42b de ce carénage. La zone conventionnellement chaude en partie basse de l'emballage est ainsi avantageusement réduite en termes d'étendue et de température maximale, et ce à moindre coût et sans abaisser la puissance thermique autorisée au sein de l'emballage.

Selon une autre forme de réalisation représentée sur la figure 3a, le carénage 30 présente une section transversale de forme générale semi-octogonale, dont le côté 54 le plus proche de la base structurale 10 est agencé parallèlement à la direction horizontale, donc parallèlement à l'axe 8. Dans cette réalisation, le plan axial et vertical médian 40 du dispositif de support constitue un plan de symétrie pour le carénage 30, tandis que l'autre plan médian 44 délimite vers le haut la demi-section octogonale. Les deux côtés latéraux inclinés 56 permettent d'aspirer une plus grande quantité d'air et facilitent la descente progressive de l'air froid vers le bas. Dans cette réalisation, l'épaisseur du canal 50 entre le carénage 30 et la surface extérieure du corps latéral 2 est légèrement variable en raison de la différence de géométrie entre les deux éléments en regard. Son épaisseur moyenne reste néanmoins dans l'intervalle de valeurs mentionné ci-dessus.

Le côté horizontal 54 le plus proche de la base structurale 10 est percé de l'ouverture 34 d'admission d'air de refroidissement, centrée sur ce même côté 54.

Le carénage 30 est par exemple réalisé à l'aide d'une tôle d'épaisseur 1 à 5 mm, pliée au niveau des angles de la demi-section octogonale.

Selon encore une autre forme de réalisation montée sur la figure 3b, le carénage 30 présente une première partie 30a analogue au carénage 30 de la figure 3, en ce sens qu'elle présente une section transversale de forme générale semi-circulaire. Néanmoins, cette première partie 30a solidaire des montants 18, 18b présente une épaisseur qui s'accroit en allant vers le bas, pour former deux chants inférieurs longitudinaux 60, chacun en regard d'un autre chant 62 formé par une seconde partie 30a du carénage, fixée sur la base structurale 10 au niveau d'une partie supérieure de celle-ci. A titre d'exemple, la seconde partie 30b se présente sous la forme d'une structure longitudinale parallèle à l'axe 8, et de section transversale triangulaire de façon à ce que deux de ses côtés forment respectivement les deux chants 62.

Chaque couple de chants 60, 62 en regard forme une ouverture 34 d'admission d'air de refroidissement, dont l'orientation peut être maîtrisée. De préférence, l'ouverture 34 située verticalement proche du point bas de l'emballage 1, mais du côté gauche du plan médian 40, est orientée pour délivrer de l'air vers la droite dans le canal 50, tandis que l'ouverture 34 située du côté droits du plan médian 40 est orientée pour délivrer de l'air vers la gauche dans le canal 50. Cela permet d'approcher l'air de refroidissement au plus près du point bas critique de l'emballage 1, pour un meilleur refroidissement.

Selon un second mode de réalisation préféré de l'invention représenté sur la figure 4, les premiers et seconds moyens de support prennent ici la forme de deux berceaux 18a', 18b', sur lesquels repose le corps latéral 2 de l'emballage 1. Les berceaux peuvent être fermés sur le dessus par des armatures 64 permettant d'entourer entièrement le corps latéral de l'emballage, afin d'améliorer le maintien de ce dernier.

Dans ce second mode de réalisation, la base structurale 10 peut être identique ou analogue à celle du mode de réalisation précédent, ou bien se présenter sous une forme plus pleine, comme cela a été schématisé sur la figure 4.

Le carénage 30 s'étend selon la même longueur axiale La, correspondant également à la distance d'écartement axial Dea entre les deux berceaux 18a', 18b'.

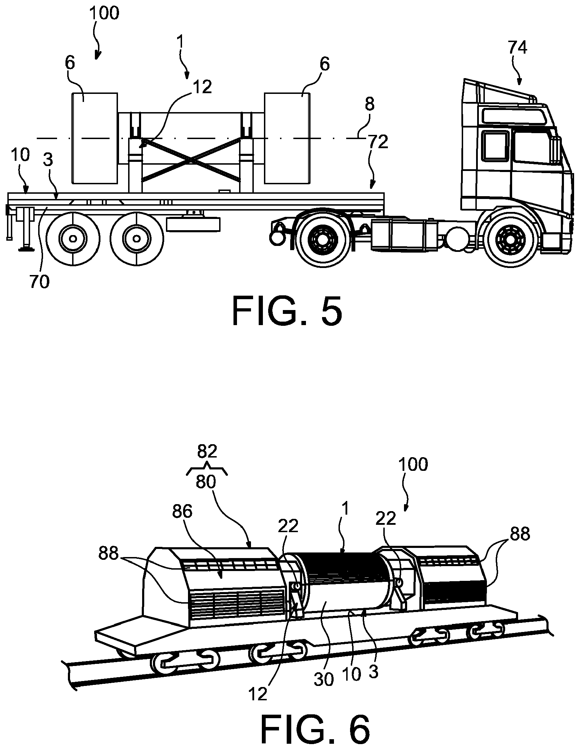

Quelle que soit la conception envisagée, il est noté que selon une première application évoquée ci-dessus, le dispositif de support 3 forme un châssis de transport / entreposage de l'emballage, éventuellement destiné à être manutentionné avec l'emballage lorsque ce dernier se trouve supporté par le dispositif. Dans ce cas, le châssis peut par exemple être placé sur la plateforme d'un système de transport de matières radioactives, par exemple la plateforme d'un wagon appartenant à un système de transport ferroviaire, ou encore la plateforme 70 d'une remorque 72 appartenant à un système de transport routier 74, comme cela a été schématisé sur la figure 5.

Alternativement, comme cela a été schématisé sur la figure 6, il est prévu que la base structurale 10 forme tout ou partie d'une plateforme d'un wagon 80 appartenant à un système de transport ferroviaire 82, ou forme tout ou partie d'une plateforme d'une remorque appartenant à un système de transport routier. Dans cette application, le dispositif de support selon l'invention est directement intégré à la structure du système de transport, de sorte qu'il n'est pas conçu pour être manutentionné, mais destiné à rester à demeure sur le véhicule dont il fait partie intégrante.

Sur la figure 6, le wagon 80 est conventionnellement équipé d'un élément 86 dénommé « canopy », monté sur la plateforme 10 de ce wagon et destiné à recouvrir l'ensemble 100. Cet élément 86 peut être prévu en plusieurs parties coulissantes sur la plateforme, et équipées de grilles 88 permettant l'introduction et l'évacuation d'air, notamment pour la circulation de l'air de refroidissement destiné à transiter par le carénage 30 spécifique à l'invention.

Bien entendu, diverses modifications peuvent être apportées par l'homme du métier à l'invention qui vient d'être décrite, uniquement à titre d'exemples non limitatifs.

## Revendications

1. Dispositif (3) de support d'un emballage de transport / entreposage de matières radioactives (1) en position horizontale, le dispositif de support comprenant une base structurale (10) ainsi que des moyens de support (12) de l'emballage portés par ladite base structurale à partir de laquelle ils font saillie vers le haut,
**caractérisé en ce qu'**il comprend de plus, situé au moins en partie au-dessus de la base structurale (10), un carénage (30) de guidage d'air de refroidissement de l'emballage par convection naturelle, ledit carénage (30) définissant une cavité (32) ouverte vers le haut et dans laquelle une partie de l'emballage est destinée à être logée lorsque cet emballage (1) est supporté en position horizontale sur le dispositif, ledit carénage (30) comprenant, en partie basse de celui-ci, au moins une ouverture (34) d'admission d'air de refroidissement dans ladite cavité (32).

2. Dispositif de support selon la revendication 1, **caractérisé en ce que** lesdits moyens de support (12) comprennent des premiers moyens de support destinés à recevoir une partie de tête (2a) de l'emballage, ainsi que des seconds moyens de support destinés à recevoir une partie de fond (2b) de l'emballage, lesdits premiers et second moyens de support étant écartés axialement d'une distance d'écartement axial (Dea), et **en ce que** le carénage (30) de guidage d'air présente de préférence une longueur axiale (La) sensiblement identique à la distance d'écartement axial (Dea).

3. Dispositif de support selon la revendication 2, **caractérisé en ce que** ledit carénage (30) comporte une première extrémité axiale (36a) fixée sur lesdits premiers moyens de support, ainsi qu'une seconde extrémité axiale (36b) fixée sur lesdits seconds moyens de support.

4. Dispositif de support selon l'une quelconque des revendications précédentes, **caractérisé en ce que** ledit carénage (30) présente une forme générale semi-cylindrique, percée de ladite au moins une ouverture (34) d'admission d'air de refroidissement.

5. Dispositif de support selon l'une quelconque des revendications précédentes, **caractérisé en ce que** ladite au moins une ouverture (34) d'admission d'air de refroidissement est agencée au niveau d'un point bas du carénage (30).

6. Dispositif de support selon l'une quelconque des revendications précédentes, **caractérisé en ce que** ladite au moins une ouverture (34) d'admission d'air de refroidissement s'étend sur toute la longueur axiale (La) du carénage.

7. Dispositif de support selon l'une quelconque des revendications précédentes, **caractérisé en ce qu'**il forme un châssis (3) de transport / entreposage de l'emballage, éventuellement destiné à être manutentionné avec l'emballage (1) lorsque ce dernier se trouve supporté par le dispositif.

8. Dispositif de support selon l'une quelconque des revendications 1 à 6, **caractérisé en ce que** la base structurale (10) forme tout ou partie d'une plateforme d'un wagon appartenant à un système de transport ferroviaire (82), ou forme tout ou partie d'une plateforme d'une remorque appartenant à un système de transport routier.

9. Ensemble (100) comprenant un emballage de transport / entreposage de matières radioactives, ainsi qu'un dispositif de support (3) selon l'une quelconque des revendications précédentes, ledit emballage (1) étant supporté en position horizontale sur ledit dispositif (3), avec une partie d'un corps latéral (2) de l'emballage logée dans ladite cavité (38) définie par le carénage (30) de guidage d'air de refroidissement.

10. Ensemble selon la revendication 9, **caractérisé en ce que** ledit emballage (1) comporte des tourillons de manutention (22), et **en ce que** lesdits moyens de support (12) comportent des logements (20) recevant chacun l'un desdits tourillons (22).

11. Ensemble selon la revendication 9, **caractérisé en ce que** lesdits moyens de support (12) comportent au moins deux berceaux (18a', 18b') sur lesquels repose le corps latéral (2) de l'emballage (1).

12. Ensemble selon l'une quelconque des revendications 9 à 11, **caractérisé en ce que** ledit carénage (30) de guidage d'air de refroidissement présente deux extrémités transversales opposées (42a, 42b), se situant chacune sur ou à proximité d'un plan axial et horizontal médian (44) de l'emballage.

13. Ensemble selon l'une quelconque des revendications 9 à 12, **caractérisé en ce que** la surface intérieure du carénage (30) et la surface extérieure du corps latéral (2) de l'emballage définissent entre eux un canal de circulation d'air de refroidissement (50), d'épaisseur moyenne comprise entre 50 et 200 mm.

14. Ensemble selon l'une quelconque des revendications 9 à 13, **caractérisé en ce que** la surface intérieure du carénage (30) et la surface extérieure du corps latéral (2) de l'emballage (1) définissent entre eux un canal (50) de circulation d'air de refroidissement d'épaisseur sensiblement constante.

15. Système (74, 82) de transport de matières radioactives, routier ou ferroviaire, comprenant un dispositif de support (3) selon l'une quelconque des revendications 1 à 9, ladite base structurale (10) du dispositif de support (3) étant rapportée sur une plateforme (70) du système de transport, ou formant tout ou partie de cette plateforme.

## Patentansprüche

1. Vorrichtung (3) zur Stützung einer Verpackung zum Transportieren/Lagern von radioaktiven Materialien (1) in horizontaler Position, wobei die Stützvorrichtung eine Strukturbasis (10) sowie von der Strukturbasis getragene Stützmittel (12) der Verpackung umfasst, ab der sie nach oben hervorstehen,
**dadurch gekennzeichnet, dass** sie weiterhin, mindestens teilweise oberhalb der Strukturbasis (10) gelegen, eine Ummantelung (30) zur Führung von Luft zur Kühlung der Verpackung durch natürliche Konvektion umfasst, wobei die Ummantelung (30) einen nach oben offenen Hohlraum (32) festlegt und in welchem ein Teil der Verpackung bestimmt ist, untergebracht zu sein, wenn diese Verpackung (1) in horizontaler Position auf der Vorrichtung gestützt ist, wobei die Ummantelung (30) im unteren Teil derselben mindestens eine Zuleitungsöffnung (34) von Kühlluft in den Hohlraum (32) umfasst.

2. Stützvorrichtung nach Anspruch 1, **dadurch gekennzeichnet, dass** die Stützmittel (12) erste Stützmittel, die zur Aufnahme eines Kopfteils (2a) der Verpackung bestimmt sind, sowie zweite Stützmittel, die zur Aufnahme eines Bodenteils (2b) der Verpackung bestimmt sind, umfassen, wobei die ersten und zweiten Stützmittel in einem axialen Beabstandungsabstand (Dea) axial beabstandet sind, und dadurch, dass die Ummantelung (30) zur Führung von Luft vorzugsweise eine axiale Länge (La) aufweist, die im Wesentlichen mit dem axialen Beabstandungsabstand (Dea) identisch ist.

3. Stützvorrichtung nach Anspruch 2, **dadurch gekennzeichnet, dass** die Ummantelung (30) ein erstes axiales Ende (36a), das auf den ersten Stützmitteln befestigt ist, sowie ein zweites axiales Ende (36b), das auf den zweiten Stützmitteln befestigt ist, aufweist.

4. Stützvorrichtung nach einem der vorangehenden Ansprüche, **dadurch gekennzeichnet, dass** die Ummantelung (30) eine allgemein halbzylindrische Form aufweist, die von der mindestens einen Zuleitungsöffnung (34) von Kühlluft durchbrochen ist.

5. Stützvorrichtung nach einem der vorangehenden Ansprüche, **dadurch gekennzeichnet, dass** die mindestens eine Zuleitungsöffnung (34) von Kühlluft im Bereich eines niedrigen Punktes der Ummantelung (30) ausgebildet ist.

6. Stützvorrichtung nach einem der vorangehenden Ansprüche, **dadurch gekennzeichnet, dass** sich die mindestens eine Zuleitungsöffnung (34) von Kühlluft über die gesamte axiale Länge (La) der Ummantelung erstreckt.

7. Stützvorrichtung nach einem der vorangehenden Ansprüche, **dadurch gekennzeichnet, dass** sie einen Rahmen (3) zum Transportieren/Lagern der Verpackung bildet, der eventuell zur Handhabung mit der Verpackung (1) bestimmt ist, wenn diese von der Vorrichtung gestützt wird.

8. Stützvorrichtung nach einem der Ansprüche 1 bis 6, **dadurch gekennzeichnet, dass** die Strukturbasis (10) die gesamte oder einen Teil einer Plattform eines Waggons bildet, der zu einem Schienentransportsystem (82) gehört, oder die gesamte oder einen Teil einer Plattform eines Anhängers bildet, der zu einem Straßentransportsystem gehört.

9. Einheit (100), umfassend eine Verpackung zum Transportieren/Lagern von radioaktiven Materialien sowie eine Stützvorrichtung (3) nach einem der vorangehenden Ansprüche, wobei die Verpackung (1) in horizontaler Position mit einem in dem Hohlraum (38), der von der Ummantelung (30) zur Führung von Kühlluft festgelegt ist, untergebrachten Teil eines seitlichen Körpers (2) der Verpackung auf der Vorrichtung (3) gestützt wird.

10. Einheit nach Anspruch 9, **dadurch gekennzeichnet, dass** die Verpackung (1) Handhabungszapfen (22) aufweist und dass die Stützmittel (12) Aufnahmen (20) aufweisen, die jeweils einen der Zapfen (22) aufnehmen.

11. Einheit nach Anspruch 9, **dadurch gekennzeichnet, dass** die Stützmittel (12) mindestens zwei Stützbögen (18a', 18b') aufweisen, auf denen der seitliche Körper (2) der Verpackung (1) ruht.

12. Einheit nach einem der Ansprüche 9 bis 11, **dadurch gekennzeichnet, dass** die Ummantelung (30) zur Führung von Kühlluft zwei gegenüberliegende transversale Enden (42a, 42b) aufweist, die sich jeweils auf oder in der Nähe einer axial und horizontal mittleren Ebene (44) der Verpackung befinden.

13. Einheit nach einem der Ansprüche 9 bis 12, **dadurch gekennzeichnet, dass** die innere Fläche der Ummantelung (30) und die äußere Fläche des seitlichen Körpers (2) der Verpackung zwischen sich einen Kühlluft-Zirkulationskanal (50) mit durchschnittlicher Stärke festlegen, die zwischen 50 und 200 mm liegt.

14. Einheit nach einem der Ansprüche 9 bis 13, **dadurch gekennzeichnet, dass** die innere Fläche der Ummantelung (30) und die äußere Fläche des seitlichen Körpers (2) der Verpackung (1) zwischen sich einen Kühlluft-Zirkulationskanal (50) mit im Wesentlichen konstanter Stärke festlegen.

15. System (74, 82) zum Straßen- oder Schienentransport von radioaktiven Materialien, umfassend eine Stützvorrichtung (3) nach einem der Ansprüche 1 bis 9, wobei die Strukturbasis (10) der Stützvorrichtung (3) auf einer Plattform (70) des Transportsystems angebracht ist oder die gesamte oder einen Teil dieser Plattform bildet.

## Claims

1. A supporting device (3) for supporting a radioactive material transporting/storing package (1) in a horizontal position, the supporting device comprising a structural base (10) as well as supporting means (12) for supporting the package which are carried by said structural base from which they upwardly project,
**characterised in that** it further comprises, being located at least partly above the structural base (10), a cooling air guide shroud (30) of the package by natural convection, said shroud (30) defining an upwardly open cavity (32) in which a part of the package is intended to be housed when this package (1) is supported in a horizontal position on the device, said shroud (30) comprising, in a bottom part thereof, at least one aperture (34) for taking in cooling air in said cavity (32).

2. The supporting device according to claim 1, **characterised in that** said supporting means (12) comprise first supporting means intended to receive package head part (2a), as well as second supporting means intended to receive a package bottom part (2b), said first and second supporting means being axially spaced apart by an axial spacing distance (Dea), and **in that** the air guide shroud (30) has preferably an axial length (The) substantially identical to the axial spacing distance (Dea).

3. The supporting device according to claim 2, **characterised in that** said shroud (30) includes a first axial end (36a) attached to said first supporting means, as well as a second axial end (36b) attached to said second supporting means.

4. The supporting device according to any of the preceding claims, **characterised in that** said shroud (30) is generally of a semi-cylindrical shape, pierced by said at least one cooling air intake aperture (34).

5. The supporting device according to any of the preceding claims, **characterised in that** said at least one cooling air intake aperture (34) is arranged at a bottom point of the shroud (30).

6. The supporting device according to any of the preceding claims, **characterised in that** said at least one cooling air intake aperture (34) extends on the entire axial length (La) of the shroud.

7. The supporting device according to any of the preceding claims, **characterised in that** it forms a package transporting/storing chassis (3), possibly intended to be manipulated with the package (1) when the latter is supported by the device.

8. The supporting device according to any of claims 1 to 6, **characterised in that** the structural base (10) forms all or part of a platform of a railroad car belonging to a railway transport system (82), or forms all or part of a platform of a trailer belonging to a road transport system.

9. An assembly (100) comprising a radioactive material transporting/storing package, as well as a supporting device (3) according to any of the preceding claims, said package (1) being supported in a horizontal position on said device (3), with a part of a side body (2) of the package which is housed in said cavity (38) defined by the cooling air guide shroud (30).

10. The assembly according to claim 9, **characterised in that** said package (1) includes manipulation trunnions (22), and **in that** said supporting means (12) include housings (20) each receiving one of said trunnions (22).

11. The assembly according to claim 9, **characterised in that** said supporting means (12) include at least two cradles (18a', 18b') on which the side body (2) of the package (1) rests.

12. The assembly according to any of claims 9 to 11, **characterised in that** said cooling air guide shroud (30) have two opposite transverse ends (42a, 42b), each located on or in the proximity of a median axial horizontal plane (44) of the package.

13. The assembly according to any of claims 9 to 12, **characterised in that** the internal surface of the shroud (30) and the external surface of the side body (2) of the package define therebetween a cooling air circulation channel (50), with an average thickness between 50 and 200 mm.

14. The assembly according to any of claims 9 to 13, **characterised in that** the internal surface of the shroud (30) and the external surface of the side body (2) of the package (1) define therebetween a cooling air circulation channel (50) with a substantially constant thickness.

15. A road or railway radioactive material transport system (74, 82), comprising a supporting device (3) according to any of claims 1 to 9, said structural base (10) of the supporting device (3) being fastened to a platform (70) of the transport system, or forming all or part of this platform.
